# EUROPÄISCHE PATENTSCHRIFT

(11) **EP 1 775 217 B1**
(45) Veröffentlichungstag und Bekanntmachung des Hinweises auf die Patenterteilung: **13.01.2010**
(21) Anmeldenummer: 06015643.7
(22) Anmeldetag: 27.07.2006
(51) Int. Cl.: B64D 11/06

(54) **Sitzbefestigungsvorrichtung**
Seat attachment device
Dispositif de fixation d'un siège

(30) Priorität: 14.10.2005 DE 102005049187
(43) Veröffentlichungstag der Anmeldung: 18.04.2007
(73) Patentinhaber: Recaro Aircraft Seating GmbH & Co. KG, 74523 Schwäbisch Hall (DE)
(72) Erfinder: Mejuhas, Marsel, 80686 München (DE); Doll, Jürgen, 88079 Kressbronn (DE)
(74) Vertreter: Daub, Thomas

(56) Entgegenhaltungen:
- EP-A- 0 463 757
- GB-A- 2 406 877
- US-A- 5 489 172

## Beschreibung

### Stand der Technik

Die Erfindung geht aus von einer Sitzbefestigungsvorrichtung nach dem Oberbegriff des Anspruchs 1.

Aus der US 6,902,365 B1 ist bereits eine Sitzbefestigungsvorrichtung zum Befestigen eines Sitzes an einem Boden eines Flugzeugs bekannt. Die Sitzbefestigungsvorrichtung weist Horizontalbefestigungsmittel und Vertikalbefestigungsmittel auf. Die Vertikalbefestigungsmittel sind in eine Horizontallängsrichtung, parallel zu einer Befestigungsschiene, relativ zu den Horizontalbefestigungsmitteln verschiebbar. Ferner umfasst die Sitzbefestigungsvorrichtung ein drehbar gelagertes Betätigungsmittel sowie eine Getriebeeinheit zur Übertragung einer Drehbewegung des Betätigungsmittels in eine Verschiebebewegung der Vertikalbefestigungsmittel in Horizontallängsrichtung. Das Betätigungsmittel wird von einer horizontal, parallel zur Horizontallängsrichtung ausgerichteten Stange gebildet, die eine mit ihrer Längsachse übereinstimmende Rotationsachse aufweist. An das Betätigungsmittel ist ein einen Teil der Getriebeeinheit bildendes Gewinde angeformt, in das mit den Vertikalbefestigungsmitteln gekoppelte Stifte eingreifen.

Aus der GB 2 406 877 A ist eine gattungsgemäße Sitzbefestigungsvorrichtung mit einem Betätigungsmittel bekannt, das um eine vertikale Achse drehbar gelagert ist. Diese weist ferner eine Getriebeeinheit zur Übertragung einer Drehbewegung des Betätigungsmittels in eine Verschiebebewegung eines Vertikalbefestigungsmittels in Horizontallängsrichtung auf, die dazu vorgesehen ist, die Drehbewegung des Betätigungsmittels in eine Spannbewegung zu übertragen.

Der Erfindung liegt insbesondere die Aufgabe zugrunde, eine Sitzbefestigungsvorrichtung bereitzustellen, die eine kompakte Bauweise ermöglicht. Sie wird gemäß der Erfindung durch die Merkmale des Anspruchs 1 gelöst. Weitere Ausgestaltungen ergeben sich aus den Unteransprüchen.

### Vorteile der Erfindung

Die Erfindung geht aus von einer Sitzbefestigungsvorrichtung, insbesondere zur Befestigung eines Sitzes an einem Boden eines Flugzeugs, mit wenigstens einem Horizontalbefestigungsmittel und wenigstens einem Vertikalbefestigungsmittel, das in eine Horizontallängsrichtung relativ zum Horizontalbefestigungsmittel verschiebbar ist, und mit einem drehbaren Betätigungsmittel sowie einer Getriebeeinheit zur Übertragung einer Drehbewegung des Betätigungsmittels in eine Verschiebebewegung des Vertikalbefestigungsmittels in Horizontallängsrichtung, wobei das Betätigungsmittel wenigstens eine Rotationsachse aufweist, die einen Winkel größer 20° zur Horizontallängsrichtung einschließt, und die Getriebeeinheit dazu vorgesehen ist, die Drehbewegung des Betätigungsmittels in eine Spannbewegung zu übertragen.

Es wird vorgeschlagen, dass die Getriebeeinheit eine Kurvengetriebeeinheit aufweist, um die Drehbewegung in die Spannbewegung zu übertragen. Es soll unter einer "Horizoritallängsrichtung" insbesondere eine zumindest im Wesentlichen parallel zu einer aufgespannten Bodenauflageebene der Sitzbefestigungsvorrichtung bzw. - in einer Einbaulage betrachtet - eine sich zu einer Hauptbodenebene eines Bodens, auf dem ein Sitz aufgeständert werden soll, erstreckende Richtung verstanden werden, die zudem in Längsrichtung der Sitzbefestigungsvorrichtung - und damit insbesondere in oder entgegen einer Sitzrichtung eines zu montierenden Sitzes - und in Längsrichtung einer auf dem Boden aufgebrachten Befestigungsschiene ausgerichtet ist. Unter "vertikal" soll insbesondere zumindest im Wesentlichen senkrecht auf einer von der Sitzbefestigungsvorrichtung aufgespannten Bodenauflageebene stehend bzw. auf der Hauptbodenebene des Bodens, auf dem ein Sitz aufgeständert werden soll, stehend verstanden werden. Es soll unter einer "Spannbewegung" sowohl eine Bewegung zur Reduzierung und insbesondere Aufhebung einer Spannkraft als auch eine Bewegung zur Erzeugung bzw. zur Erhöhung einer Spannkraft verstanden werden. Ferner soll unter einer "Kurvengetriebeeinheit" insbesondere eine Einheit verstanden werden, die ein eine Kurvenbahn bildendes Kurvenglied und ein mit der Kurvenbahn zur Korrespondenz vorgesehenes Abtastglied aufweist.

Mittels einer entsprechenden erfindungsgemäßen Ausgestaltung kann eine besonders kompakte und konstruktiv einfache Bauweise erreicht werden, und zwar insbesondere, indem das Betätigungsmittel besonders kurz und kompakt ausgeführt werden kann. Durch die Kurvengetriebeeinheit kann die Drehbewegung konstruktiv einfach und mit einer kompakten Bauweise entsprechend übertragen werden. Ferner kann eine komfortable Bedienbarkeit erzielt werden, und zwar insbesondere, wenn die Rotationsachse zu einer Horizontalebene der Sitzbefestigungsvorrichtung einen Winkel größer 20° einschließt und/oder die Rotationsachse des Betätigungsmittels einen Winkel größer 45° und besonders bevorzugt größer 60° zur Horizontallängsrichtung und/oder besonders bevorzugt zur Horizontalebene einschließt. Unter einer "Horizontalebene" soll dabei insbesondere eine parallel zu einer von der Sitzbefestigungsvorrichtung aufgespannten Bodenauflageebene verlaufende Ebene verstanden werden.

Die Drehbewegung des Betätigungsmittels kann durch verschiedene, dem Fachmann als sinnvoll erscheinende Getriebemittel in die Verschiebebewegung des Vertikalbefestigungsmittels übertragen werden, wie beispielsweise über ein Gewinde, eine Zahnstange, ein Zahnrad usw. Weist die Getriebeeinheit einen Exzenter auf, der zur Übertragung der Drehbewegung des Betätigungsmittels in die Verschiebebewegung des Vertikalbefestigungsmittels vorgesehen ist, kann besonders konstruktiv einfach mit einer kompakten Konstruktion die entsprechende Übertragung realisiert werden.

Die Kurvengetriebeeinheit kann ein starres bzw. unbeweglich gelagertes Abtastglied aufweisen, so dass ein die Kurvenbahn aufweisendes Bauteil durch die RelaLivbewegung zwischen dem Abtastglied und dem Kurvenglied entsprechend in eine gewünschte Richtung angetrieben wird, oder die Kurvengetriebeeinheit kann ein bewegbar gelagertes Abtastglied aufweisen, wodurch der konstruktive Aufwand reduziert werden kann. Insbesondere kann vermieden werden, dass das Betätigungsmittel zusätzlich zu einer drehbaren Lagerung translatorisch verschiebbar gelagert werden muss.

Sind der Exzenter und die Kurvengetriebeeinheit zumindest teilweise einstückig ausgebildet, können zusätzliche Bauteile, Bauraum, Gewicht, Montageaufwand und Kosten eingespart werden.

In einer weiteren Ausgestaltung der Erfindung wird vorgeschlagen, dass die Sitzbefestigungsvorrichtung wenigstens ein vom Vertikalbefestigungsmittel separat ausgebildetes Federelement aufweist, das zur elastischen Auslenkung durch die Spannbewegung vorgesehen ist. Unter "separat" soll dabei insbesondere verstanden werden, dass das Federelement und das Vertikalbefestigungsmittel zumindest aus unterschiedlichen Materialien hergestellt werden können, so dass insbesondere die Materialien vorteilhaft auf die Funktionen abgestimmt werden können.

Ist das Federelement bandförmig ausgebildet, d.h. weist dasselbe im Vergleich zu seiner Länge und Breite eine relativ geringe Stärke auf, kann das Federelement Platz sparend integriert und vorteilhaft auch für weitere Funktionen genutzt werden. Ist das Federelement als Abdeckelement vorgesehen, können zusätzliche Abdeckelemente vermieden werden und es kann ein relativ großes Federelement ohne zumindest wesentliche Bauraumnachteile erreicht werden, mittels dessen ein vorteilhaft großer Federweg realisiert werden kann.

Weist die Sitzbefestigungsvorrichtung eine Verriegelungsanzeigeeinheit auf und/oder weist die Sitzbefestigungsvorrichtung eine zur Sicherung des Betätigungsmittels in wenigstens einer Drehstellung vorgesehene Drehsicherungseinheit auf, kann eine gesteigerte Bediensicherheit erreicht werden.

Sind die Verriegelungsanzeigeeinheit und das Federelement, die Drehsicherungseinheit und das Federelement und/oder sind die Drehsicherungseinheit und der Exzenter zumindest teilweise einstückig ausgebildet, können wiederum zusätzliche Bauteile, Bauraum, Gewicht, Montageaufwand und Kosten eingespart werden.

Eine erfindungsgemäße Sitzbefestigungsvorrichtung eignet sich besonders vorteilhaft zur Befestigung eines Flugzeugsitzes in einem Flugzeug, ist jedoch auch in anderen, dem Fachmann als sinnvoll erscheinenden Bereichen einsetzbar, wie beispielsweise im Bereich von Fahrzeugen, wie größeren Personenwagen, Reisebussen, Schiffsfähren, oder im Rahmen einer Saalbestuhlung, wie für eine Kongresshalle, einen Theatersaal, einen Kinosaal usw. Ferner lässt sich die Sitzbefestigungsvorrichtung auch zum Festzurren von Lasten, Gepäck oder sonstigem Transportgut von Flug- und Fahrzeugen jedweder Art verwenden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Sitzbefestigungsvorrichtung schräg von oben im montierten Zustand an einer Befestigungsschiene,
- Fig. 2: die Sitzbefestigungsvorrichtung aus Figur 1 in einem Teillängsschnitt in einer Verriegelungsstellung,
- Fig. 3: die Sitzbefestigungsvorrichtung aus Figur 1 in einem Teillängsschnitt in einer Entriegelungsstellung,
- Fig. 4: ein Einzelteil der Sitzbefestigungsvorrichtung in einer Draufsicht,
- Fig. 5: eine alternative Sitzbefestigungsvorrichtung in einem Teillängsschnitt in einer Verriegelungsstellung und
- Fig. 6: die Sitzbefestigungsvorrichtung aus Figur 5 in einer Entriegelungsstellung.

### Beschreibung der Ausführungsbeispiele

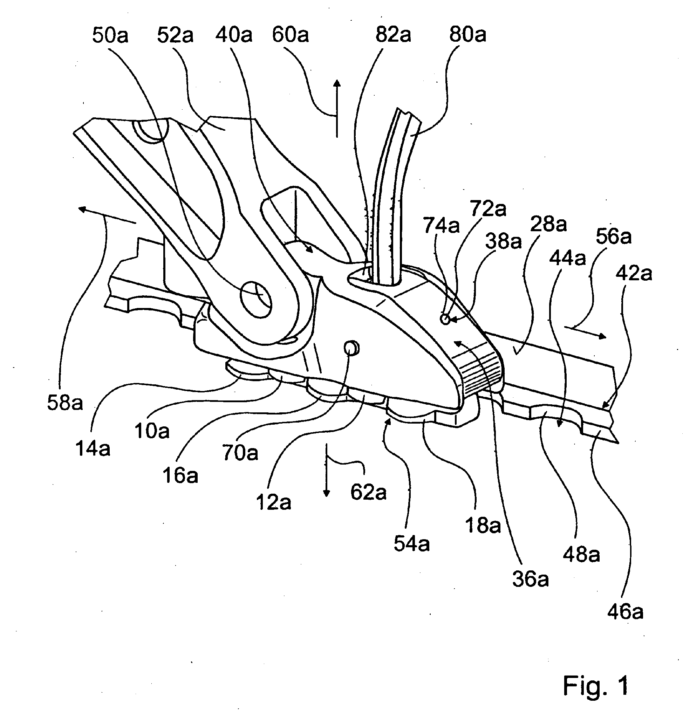

Figur 1 zeigt eine Sitzbefestigungsvorrichtung zur Befestigung eines Sitzes an einem Boden 28a bzw. einem Kabinenboden eines Flugzeugs, und zwar an in Längsrichtung des Flugzeugs verlaufenden, an dem Kabinenboden befestigten und parallel zu demselben ausgerichteten Befestigungsschienen 42a. Die Befestigungsschienen 42a schließen mit ihrer Oberseite bündig mit dem Boden 28a bzw. Kabinenboden des Flugzeugs ab. Die Befestigungsschiene 42a wird von einem Hohlprofil gebildet, das an seiner Oberseite mit einander zugewandten Profilflanken 46a einen Längskanal 44a begrenzt. Der Längskanal 44a weist in einem vorgegebenen Maß seinen freien Eintrittsquerschnitt verbreiternde Durchtrittsöffnungen 48a auf, die voneinander einen gleichmäßigen Abstand aufweisen und bohrungsartig ausgeführt sind.

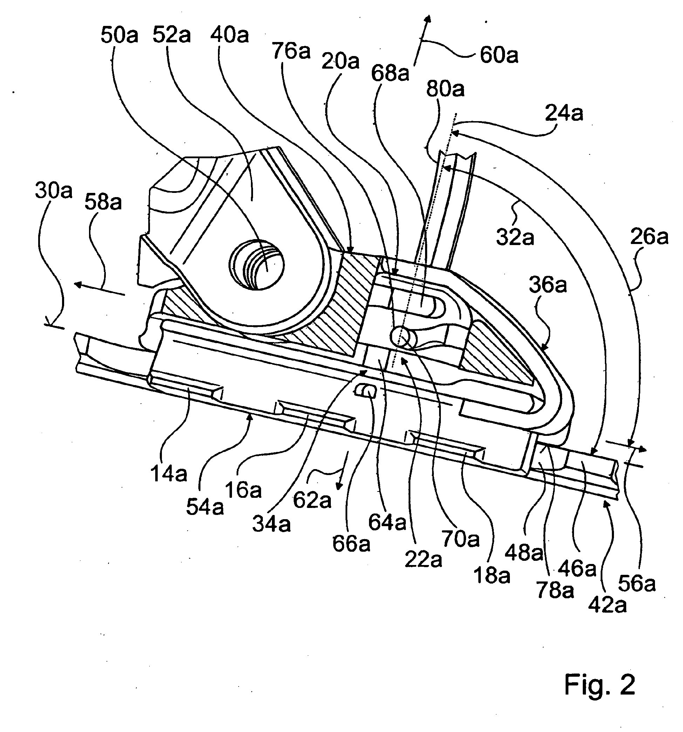

Die Sitzbefestigungsvorrichtung weist einen Grundkörper 40a mit einem angeformten Lagerauge 50a zum Befestigen eines Sitzfußes 52a auf. Ferner sind an den Grundkörper 40a Horizontalbefestigungsmittel 10a, 12a einstückig angeformt, (Figuren 1 und 2). Die Horizontalbefestigungsmittel 10a, 12a erstrecken sich in vertikaler Richtung 62a über eine Auflagefläche 78a des Grundkörpers 40a hinaus, mittels der der Grundkörper 40a bei der Montage auf einer Oberseite der Befestigungsschiene 42a zum Liegen kommt und wobei die Auflagefläche 78a eine als Horizontalebene 30a definierte Ebene der Sitzbefestigungsvorrichtung aufspannt, die in der Einbaulage betrachtet zumindest im Wesentlichen parallel zum Boden 28a ausgerichtet ist. Ferner weisen die Horizontalbefestigungsmittel 10a, 12a quer zur Längserstreckung des Grundkörpers 40a beidseitig abstehende kreissegmentförmige Ausformungen auf.

Zudem weist die Sitzbefestigungsvorrichtung ein relativ zum Grundkörper 40a in Horizontallängsrichtung 56a, 58a verschiebbares Schiebeteil 54a auf, an das in Längsrichtung der Sitzbefestigungsvorrichtung bzw. in Horizontallängsrichtung 56a, 58a zu den Horizontalbefestigungsmitteln 10a, 12a beabstandete Vertikalbefestigungsmittel 14a, 16a, 18a einstückig angeformt sind. Die Horizontallängsrichtung 56a, 58a erstreckt sich zumindest im Wesentlichen parallel zur Längsrichtung des Schiebeteils 54a sowie in der Einbaulage betrachtet zumindest im Wesentlichen parallel zur Befestigungsschiene 42a und damit zumindest im Wesentlichen parallel zum Boden 28a.

Die Vertikalbefestigungsmittel 14a, 16a, 18a ragen in die von einer Deckseite der Sitzbefestigungsvorrichtung abgewandte vertikale Richtung 62a über die Horizontalbefestigungsmittel 10a, 12a hinaus und weisen quer zur Längserstreckung des Schiebeteils 54a beidseitig abstehende kreissegmentförmige Ausformungen auf.

Ferner weist die Sitzbefestigungsvorrichtung ein in einer Ausnehmung des Grundkörpers 40a drehbar gelagertes und durch den Grundkörper 40a in seiner Drehbewegung geführtes Betätigungsmittel 20a sowie eine Getriebeeinheit 22a zur Übertragung einer Drehbewegung des Betätigungsmittels 20a in eine Verschiebebewegung des Schiebeteils 54a mit den Vertikalbefestigungsmitteln 14a, 16a, 18a in Horizontallängsrichtung 56a, 58a auf.

Das Betätigungsmittel 20a weist eine Rotationsachse 24a auf, die einen Winkel 26a von ca. 90° zur Horizontallängsrichtung 56a, 58a und einen Winkel 32a von ca. 90° zur Horizontalebene 30a der Sitzbefestigungsvorrichtung einschließt bzw. ist die Rotationsachse 24a zumindest im Wesentlichen senkrecht zur Horizontalebene 30a der Sitzbefestigungsvorrichtung sowie in der Einbaulage betrachtet zumindest im Wesentlichen senkrecht zum Boden 28a ausgerichtet.

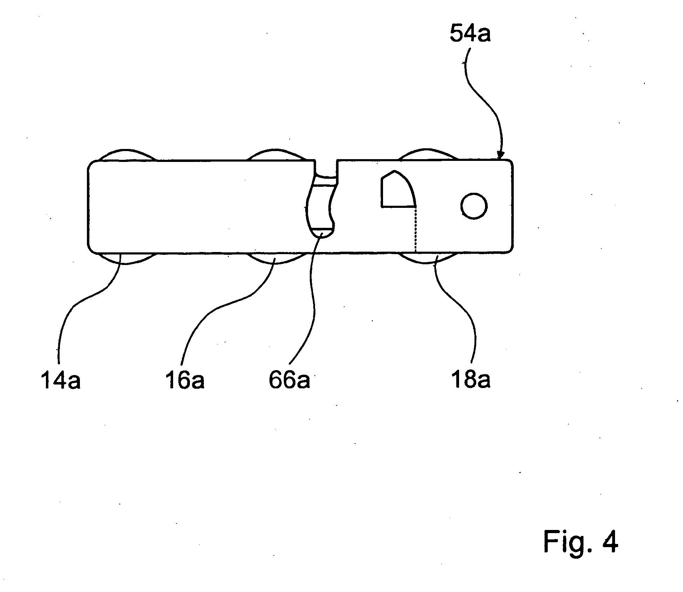

Die Getriebeeinheit 22a weist einen teilweise einstückig mit dem Betätigungsmittel 20a ausgebildeten Exzenter 34a auf, der zur Übertragung der Drehbewegung des Betätigungsmittels 20a in die Verschiebebewegung in Horizontallängsrichtung 56a, 58a des Schiebeteils 54a mit den Vertikalbefestigungsmitteln 14a, 16a, 18a vorgesehen ist. Der Exzenter 34a weist dabei einen Exzenterzapfen 64a auf, der auf einer Unterseite des Betätigungsmittels 20a in dasselbe radial zur Rotationsachse 24a beabstandet bzw. exzentrisch eingeschraubt ist. Der Exzenterzapfen 64a greift in ein gekrümmtes Langloch 66a des Schiebeteils 54a, das quer zur Längserstreckung des Schiebeteils 54a bzw. quer zur Horizontallängsrichtung 56a, 58a ausgerichtet ist (Figur 4).

Ferner ist die Getriebeeinheit 22a dazu vorgesehen, die Drehbewegung des Betätigungsmittels 20a in eine Spannbewegung zu übertragen. Hierfür weist die Getriebeeinheit 22a eine Kurvengetriebeeinheit mit einem einstückig an das Betätigungsmittel 20a angeformten, von einer Nut gebildeten Kurvenglied 68a und beidseitig im Grundkörper 40a befestigten, von Stiften gebildeten Abtastgliedern 70a auf, die in die das Kurvenglied 68a bildende Nut eingreifen und von denen nur eines dargestellt ist. Die Abtastglieder 70a sind in vertikaler Richtung 60a bzw. 62a geringfügig höhenversetzt im Grundkörper 40a angeordnet, so dass ein besonders kurz bauendes Betätigungsmittel 20a und eine vorteilhafte Abtastung erreicht werden können.

Die Sitzbefestigungsvorrichtung weist ein vom Schiebeteil 54a und von den Vertikalbefestigungsmitteln 14a, 16a, 18a separat ausgebildetes, bandförmiges, in einer Seitenansicht im Wesentlichen V-förmiges Federelement 36a aus einem Federstahlblech auf, das zur elastischen Auslenkung durch die Spannbewegung vorgesehen ist. Das Federelement 36a ist mit einem freien Ende über eine nicht näher dargestellte Schraubverbindung in das Schiebeteil 54a eingespannt, weist nach seinem Einspannbereich eine Abwinklung um ca. 130° auf und erstreckt sich ausgehend von seiner Abwinklung in Richtung des Betätigungsmittels 20a. Das Federelement 36a dient als Abdeckelement und bildet eine Deckseite der Sitzbefestigungsvorrichtung.

Ferner weist die Sitzbefestigungsvorrichtung eine Verriegelungsanzeigeeinheit 38a und eine zur Sicherung des Betätigungsmittels 20a in einer einer Verriegelungsstellung zugeordneten Drehstellung vorgesehene Drehsicherungseinheit auf, die beide teilweise einstückig mit dem Federelement 36a ausgeführt sind.

Die Verriegelungsanzeigeeinheit 38a wird im Wesentlichen durch einen am Grundkörper 40a angeordneten farbigen Bereich 72a und eine Ausnehmung 74a des Federelements 36a gebildet, die bei verriegelter Sitzbefestigungsvorrichtung über dem Bereich 72a zum Liegen kommt, so dass der farbige Bereich 72a durch die Ausnehmung 74a des Federelements 36a erkennbar ist (Figuren 1 und 2).

Die Drehsicherungseinheit wird im Wesentlichen von einer Ausformung des an das Betätigungsmittel 20a angeformten Kurvenglieds 68a bzw. von einer Einbuchtung 76a, von dem Abtastglied 70a und von dem Federelement 36a gebildet, das das Betätigungsmittel 20a in einer Verriegelungsstellung in Richtung des Abtastglieds 70a belastet, so dass das Abtastglied 70a federbelastet in der Einbuchtung 76a angeordnet ist und ein unerwünschtes Lösen des Betätigungsmittels 20a aus einer Verriegelungsstellung sicher vermieden ist (Figur 2).

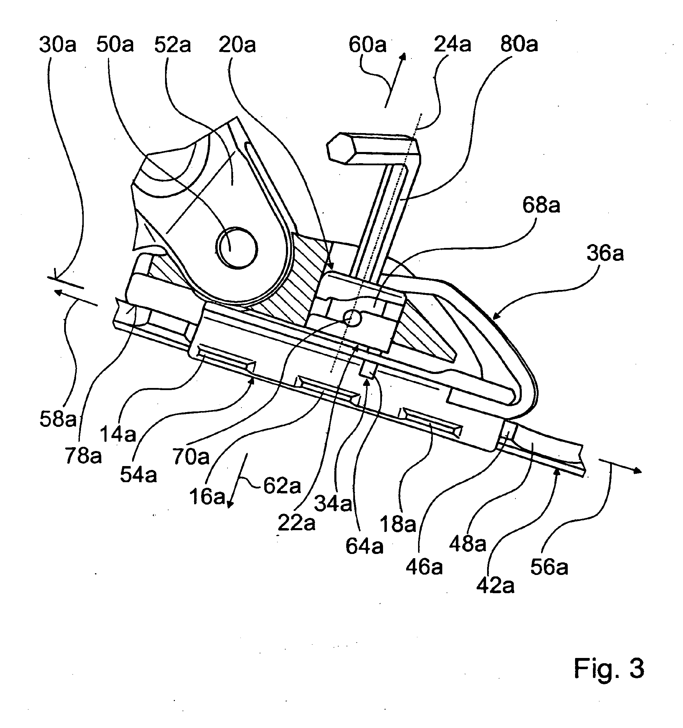

Bei der Montage wird die Sitzbefestigungsvorrichtung auf die Befestigungsschiene 42a aufgesetzt. Dabei greifen die Horizontalbefestigungsmittel 10a, 12a in Horizontallängsrichtung 56a, 58a formschlüssig in die Durchtrittsöffnungen 48a ein, so dass die Sitzbefestigungsvorrichtung über die Horizontalbefestigungsmittel 10a, 12a in Horizontallängsrichtung 56a, 58a formschlüssig fixiert ist. Die Vertikalbefestigungsmittel 14a, 16a, 18a werden durch die Durchtrittsöffnungen 48a hindurchgeführt und der Grundkörper 40a kommt mit seiner Auflagefläche 78a, die parallel zu der als Horizontalebene 30a definierten Ebene der Sitzbefestigungsvorrichtung verläuft, auf der Oberseite der Befestigungsschiene 42a zur Anlage (Figur 3).

Das Betätigungsmittel 20a weist an seiner Deckseite bzw. auf der den Vertikalbefestigungsmitteln 14a, 16a, 18a abgewandten Seite einen Innensechskant auf, über den das Betätigungsmittel 20a anschließend mit einem Sechskantschlüssel 80a um ca. 210° entgegen dem Uhrzeigersinn von seiner Entriegelungsstellung in seine Verriegelungsstellung gedreht werden kann (Figuren 3 und 2). Das Langloch 66a beschreibt in seinem Endverlauf zum Rand des Schiebeteils 54a hin eine nach außen gezwungene Kreisbahn, so dass mittels einer Umdrehung von 210° eine gewünschte Längsverschiebung erreicht wird (Figur 4). Durch vom Kurvenglied 68a gebildete Endanschläge wird sichergestellt, dass das Betätigungsmittel 20a maximal um 210° gedreht werden kann. Das Federelement 36a weist an seinem dem Betätigungsmittel 20a zugewandten Ende eine Ausnehmung 82a auf, durch die der Sechskantschlüssel 80a zum Betätigen des Betätigungsmittels 20a geführt werden kann.

Durch die Drehbewegung des Betätigungsmittels 20a wird das Schiebeteil 54a gemeinsam mit den Vertikalbefestigungsmitteln 14a, 16a, 18a, angetrieben mittels des Exzenters 34a, in Horizontallängsrichtung 58a um 12,7 mm verschoben, so dass die Vertikalbefestigungsmittel 14a, 16a, 18a unterhalb der Profilflanken 46a zum Liegen kommen.

Ferner wird durch die Drehbewegung des Betätigungsmittels 20a dasselbe, angetrieben mittels der Kurvengetriebeeinheit, in vertikaler Richtung 60a verfahren, wodurch das auf einer Oberseite des Betätigungsmittels 20a aufliegende Federelement 36a ausgelenkt und gespannt wird. Der Exzenterzapfen 64a ist entsprechend lang ausgeführt, so dass dieser stets in das Langloch 66a eingreift.

Im gespannten Zustand schließt das Federelement 36a bündig mit einer Deckseite des Grundkörpers 40a ab und kommt mit seiner Ausnehmung 74a über dem farblich markierten Bereich 72a zum Liegen. Eine durch die Auslenkung des Federelements 36a sich aufbauende Spannkraft wird vom Federelement 36a auf das Schiebeteil 54a übertragen, so dass dieses gemeinsam mit den Vertikalbefestigungsmitteln 14a, 16a, 18a in vertikaler Richtung 60a zum Grundkörper 40a bewegt wird und sich die Vertikalbefestigungsmittel 14a, 16a, 18a mit einer Spannkraft an einer Unterseite der Profilflanken 46a an denselben anlegen. Die Sitzbefestigungsvorrichtung ist damit in Horizontallängsrichtung 56a, 58a und in vertikaler Richtung 60a, 62a form- und kraftschlüssig fixiert. Durch den Kraftschluss können insbesondere Relativbewegungen der Sitzbefestigungsvorrichtung zur Befestigungsschiene 42a und eine dadurch bedingte Geräuschentwicklung vermieden werden.

Eine Entriegelung der Sitzbefestigungsvorrichtung erfolgt entsprechend in umgekehrter Reihenfolge zur Verriegelung.

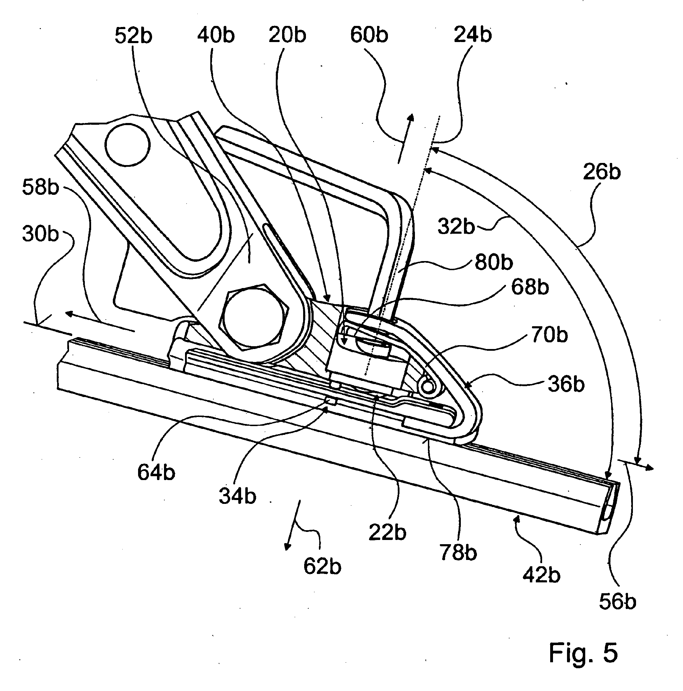

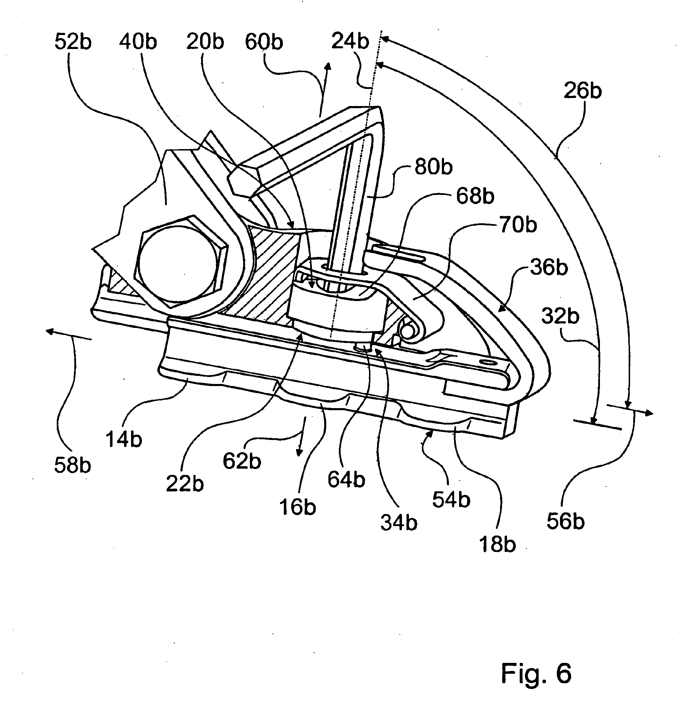

In den Figuren 5 und 6 ist ein weiteres Ausführungsbeispiel der Erfindung dargestellt. Im Wesentlichen gleich bleibende Merkmale und Funktionen sind grundsätzlich mit den gleichen Bezugszeichen beziffert. Zur Unterscheidung der Ausführungsbeispiele sind den Bezugszeichen die Buchstaben "a" und "b" hinzugeführt. Die nachfolgende Beschreibung beschränkt sich im Wesentlichen auf die Unterschiede zum Ausführungsbeispiel in den Figuren 1 bis 4. Bezüglich gleich bleibender Merkmale und Funktionen darf auf die Beschreibung zu dem Ausführungsbeispiel in den Figuren 1 bis 4 verwiesen werden.

Die Figuren 5 und 6 zeigen eine Sitzbefestigungsvorrichtung mit einem Betätigungsmittel 20b, das anstatt eines von einer Nut gebildeten Kurvenglieds 68a ein an einer Deckseite angeordnetes, von einer Nockenkontur gebildetes Kurvenglied 68b aufweist. Mit dem Kurvenglied 68b wirkt ein schwenkbar gelagertes, von einem Biegeblech gebildetes Abtastglied 70b zusammen, das an seinem freien Ende eine Abwinklung aufweist, die mit ihrer Stirnseite auf der Nockenkontur aufliegt. Wird das Betätigungsmittel 20b gedreht wird entsprechend dem Ausführungsbeispiel in den Figuren 1 bis 4 ein Schiebeteil 54b in Horizontallängsrichtung 58b mittels eines Exzenters 34b verschoben (Figuren 6 und 5). Ferner wird durch die Drehbewegung des Betätigungsmittels 20b das Abtastglied 70b, angetrieben mittels der Kurvengetriebeeinheit, in vertikaler Richtung 60b geschwenkt, wodurch ein auf einer Oberseite des Abtastglieds 70b aufliegendes Federelement 36b ausgelenkt und gespannt wird, ohne dass das Betätigungsmittel 20b in seiner Gesamtheit eine Hubbewegung in vertikaler Richtung 60b durchführt.

### Bezugszeichen

- 10: Horizontalbefestigungsmittel
- 12: Horizontalbefestigungsmittel
- 14: Vertikalbefestigungsmittel
- 16: Vertikalbefestigungsmittel
- 18: Vertikalbefestigungsmittel
- 20: Betätigungsmittel
- 22: Getriebeeinheit
- 24: Rotationsachse
- 26: Winkel
- 28: Boden
- 30: Horizontalebene
- 32: Winkel
- 34: Exzenter
- 36: Federelement
- 38: Verriegelungsanzeigeeinheit
- 40: Grundkörper
- 42: Befestigungsschiene
- 44: Längskanal
- 46: Profilflanke
- 48: Durchtrittsöffnung
- 50: Lagerauge
- 52: Sitzfuß
- 54: Schiebeteil
- 56: Horizontallängsrichtung
- 58: Horizontallängsrichtung
- 60: Richtung
- 62: Richtung
- 64: Exzenterzapfen
- 66: Langloch
- 68: Kurvenglied
- 70: Abtastglied
- 72: Bereich
- 74: Ausnehmung
- 76: Einbuchtung
- 78: Auflagefläche
- 80: Sechskantschlüssel
- 82: Ausnehmung

## Patentansprüche

1. Sitzbefestigungsvorrichtung, insbesondere zur Befestigung eines Sitzes an einem Boden (28) eines Flugzeugs, mit wenigstens einem Horizontalbefestigungsmittel (10, 12) und wenigstens einem Vertikalbefestigungsmittel (14, 16, 18), das in eine Horizontallängsrichtung (56, 58) relativ zum Horizontalbefestigungsmittel (10, 12) verschiebbar ist, und mit einem drehbaren Retätigungsmittel (20) sowie einer Getriebeeinheit (22) zur Übertragung einer Drehbewegung des Betätigungsmittels (20) in eine Verschiebebewegung des Vertikalbefestigungsmittels (14, 16, 18) in Horizontallängsrichtung (56, 58),
wobei das Betätigungsmittel (20) wenigstens eine Rotationsachse (24) aufweist, die einen Winkel (26) größer 20° zur Horizontallängsrichtung (56, 58) einschließt, und die Getriebeeinheit (22) dazu vorgesehen ist, die Drehbewegung des Betätigungsmittels (20) in eine Spannbewegung zu übertragen,
**dadurch gekennzeichnet,**
**dass** die Getriebeeinheit (22) eine Kurvengetriebeeinheit aufweist, um die Drehbewegung in die Spannbcwcgung zu übertragen.

2. Sitzbefestigungsvorrichtung nach Anspruch 1,
**dadurch gekennzeichnet,**
**dass** die Rotationsachse (24) des Betätigungsmittels (20) einen Winkel (32) größer 20° zu einer Horizontalebene (30) einschließt.

3. Sitzbefestigungsvorrichtung nach einem der vorhergehenden Ansprüche,
**dadurch gekennzeichnet,**
**dass** die Getriebeeinheit (22) einen Exzenter (34) aufweist, der zur Übertragung der Drehbewegung des Betätigungsmittels (20) in die Verschiebebewegung in Horizontallängsrichtung (56, 58) des Vertikalbefestigungsmittels (14, 16, 18) vorgesehen ist.

4. Sitzbefestigungsvorrichtung nach einem der vorhergehenden Ansprüche,
**dadurch gekennzeichnet,**
**dass** die Kurvengetriebeeinheit der Getriebeeinheit (22b) ein beweglich gelagertes Abtastglied (70b) aufweist.

5. Sitzbefestigungsvorrichtung nach Anspruch 3,
**dadurch gekennzeichnet,**
**dass** der Exzenter (34) und die Kurvengetriebeeinheit zumindest teilweise einstückig ausgebildet sind.

6. Sitzbefestigungsvorrichtung nach einem der vorhergehenden Ansprüche,
**gekennzeichnet durch**
wenigstens ein vom Vertikalbefestigungsmittel (14, 16, 18) separat ausgebildetes Federelement (36), das zur elastischen Auslenkung **durch** die Spannbewegung vorgesehen ist.

7. Sitzbefestigungsvorrichtung nach Anspruch 6,
**dadurch gekennzeichnet,**
**dass** das Federelement (36) bandförmig ausgebildet ist.

8. Sitzbefestigungsvorrichtung nach Anspruch 6,
**dadurch gekennzeichnet,**
**dass** das Federelement (36) als Abdeckelement vorgesehen ist.

9. Sitzbefestigungsvorrichtung nach einem der vorhergehenden Ansprüche,
**gekennzeichnet durch**
eine Verriegelungsanzeigeeinheit (38a).

10. Sitzbefestigungsvorrichtung nach Anspruch 6 und 9,
**dadurch gekennzeichnet,**
**dass** die Verriegelungsanzeigeeinheit (38a) und das Federelement (36a) zumindest teilweise einstückig ausgebildet sind.

11. Sitzbefestigungsvorrichtung nach einem der vorhergehenden Ansprüche,
**gekennzeichnet durch**
eine Drehsicherungseinheit, die zur Sicherung des Betätigungsmittels (20a) in wenigstens einer Drehstellung vorgesehen ist.

12. Sitzbefestigungsvorrichtung nach Anspruch 6 und 11,
**dadurch gekennzeichnet,**
**dass** die Drehsicherungseinheit und das Federelement (36a) zumindest teilweise einstückig ausgebildet sind.

13. Sitzbefestigungsvorrichtung nach Anspruch 3 und 11,
**dadurch gekennzeichnet,**
**dass** die Drehsicherungseinheit und der Exzenter (34a) zumindest teilweise einstückig ausgebildet sind.

## Claims

1. Seat fastening device, in particular for fastening a seat to a floor (28) in an aircraft, having at least one horizontal fastening member (10, 12) and at least one vertical fastening member (14, 16, 18) which can be moved in a horizontal longitudinal direction (56, 58) relative to the horizontal fastening member (10, 12) and having a rotatable operating member (20), as well as a transmission unit (22) for transmission of a rotary movement of the operating member (20) to a shifting movement of the vertical fastening member (14, 16, 18) in the horizontal longitudinal direction (56, 58),
wherein the operating member (20) has at least one rotation axis (24) which includes an angle (26) greater than 20° with the horizontal longitudinal direction (56, 58), and the transmission unit (22) is provided to convert the rotary movement of the operating member (20) to a stressing movement, **characterized in that** the transmission unit (22) has a cam mechanism unit in order to convert the rotary movement to the stressing movement.

2. Seat fastening device according to Claim 1,
**characterized in that**
the rotation axis (24) of the operating member (20) builds up an angle (32) of greater than 20° with a horizontal plane (30).

3. Seat fastening device according to one of the preceding claims,
**characterized in that**
the transmission unit (22) comprises an eccentric (34) which is provided for conversion of the rotary movement of the operating member (20) to the shifting movement in the horizontal longitudinal direction (56, 58) of the vertical fastening member (14, 16, 18).

4. Seat fastening device according to one of the preceding claims,
**characterized in that**
the cam mechanism unit of the transmission unit (22b) comprises a probe member (70b) which is movably mounted.

5. Seat fastening device according to Claim 3,
**characterized in that**
the eccentric (34) and the cam mechanism unit are at least partially formed integrally.

6. Seat fastening device according to one of the preceding claims,
**characterized by**
at least one spring member (36), which is formed separately from the vertical fastening member (14, 16, 18) and is provided for elastic deflection by means of the stressing movement.

7. Seat fastening device according to Claim 6,
**characterized in that**
the spring member (36) is formed as a strip.

8. Seat fastening device according to Claim 6,
**characterized in that**
the spring member (36) is provided as a cover member.

9. Seat fastening device according to one of the preceding claims,
**characterized by**
a locking indication unit (38a).

10. Seat fastening device according to Claims 6 and 9,
**characterized in that**
the locking indication unit (38a) and the spring member (36a) are at least partially formed integrally.

11. Seat fastening device according to one of the preceding claims,
**characterized by**
a rotation locking unit, which is provided in order to secure the operating member (20a) in at least one rotation position.

12. Seat fastening device according to Claims 6 and 11,
**characterized in that**
the rotation locking unit and the spring member (36a) are at least partially formed integrally.

13. Seat fastening device according to Claims 3 and 11,
**characterized in that**
the rotation locking unit and the eccentric (34a) are at least partially formed integrally.

## Revendications

1. Dispositif de fixation d'un siège, en particulier pour la fixation d'un siège à un plancher (28) d'un avion, avec au moins un moyen de fixation horizontal (10, 12) et au moins un moyen de fixation vertical (14, 16, 18), qui peut se déplacer dans une direction longitudinale horizontale (56, 58) par rapport au moyen de fixation horizontal (10, 12), et avec un moyen d'actionnement rotatif (20) ainsi qu'une unité de commande (22) pour la transmission d'un mouvement de rotation du moyen d'actionnement (20) dans une direction de déplacement du moyen de fixation vertical (14, 16, 18) dans la direction longitudinale horizontale (56, 58), dans lequel le moyen d'actionnement (20) présente au moins un axe de rotation (24), qui forme un angle (26) supérieur à 20° avec la direction longitudinale horizontale (56, 58), et l'unité de commande (22) est prévue pour transmettre le mouvement de rotation du moyen d'actionnement (20) dans un mouvement de serrage, **caractérisé en ce que** l'unité de commande (22) comprend une unité de commande à cames, pour transmettre le mouvement de rotation dans le mouvement de serrage.

2. Dispositif de fixation d'un siège selon la revendication 1, **caractérisé en ce que** l'axe de rotation (24) du moyen d'actionnement (20) forme un angle (32) de plus de 20° avec un plan horizontal (30).

3. Dispositif de fixation d'un siège selon l'une quelconque des revendications précédentes, **caractérisé en ce que** l'unité de commande (22) comprend un excentrique (34), qui est prévu pour la transmission du mouvement de rotation du moyen d'actionnement (20) dans le mouvement de déplacement du moyen de fixation vertical (14, 16, 18) dans la direction longitudinale horizontale (56, 58).

4. Dispositif de fixation d'un siège selon l'une quelconque des revendications précédentes, **caractérisé en ce que** l'unité de commande à cames de l'unité de commande (22b) comprend un organe palpeur (70b) monté de façon mobile.

5. Dispositif de fixation d'un siège selon la revendication 3, **caractérisé en ce que** l'excentrique (34) et l'unité de commande à cames sont réalisés au moins partiellement en une seule pièce.

6. Dispositif de fixation d'un siège selon l'une quelconque des revendications précédentes, **caractérisé par** au moins un élément de ressort (36) réalisé séparément du moyen de fixation vertical (14, 16, 18), et qui est prévu pour une élongation élastique par le mouvement de serrage.

7. Dispositif de fixation d'un siège selon la revendication 6, **caractérisé en ce que** l'élément de ressort (36) est réalisé en forme de bande.

8. Dispositif de fixation d'un siège selon la revendication 6, **caractérisé en ce que** l'élément de ressort (36) est prévu en forme d'élément de masquage.

9. Dispositif de fixation d'un siège selon l'une quelconque des revendications précédentes, **caractérisé par** une unité d'affichage de verrouillage (38a).

10. Dispositif de fixation d'un siège selon la revendications 6 et 9, **caractérisé en ce que** l'unité d'affichage de verrouillage (38a) et l'élément de ressort (36a) sont réalisés au moins partiellement en une seule pièce.

11. Dispositif de fixation d'un siège selon l'une quelconque des revendications précédentes, **caractérisé par** une unité de blocage de rotation, qui est prévue pour le blocage du moyen d'actionnement (20a) dans au moins une position angulaire.

12. Dispositif de fixation d'un siège selon la revendication 6 et 11, **caractérisé en ce que** l'unité de blocage de rotation et l'élément de ressort (36a) sont réalisés au moins partiellement en une seule pièce.

13. Dispositif de fixation d'un siège selon la revendication 3 et 11, **caractérisé en ce que** l'unité de blocage de rotation et l'excentrique (34a) sont réalisés au moins partiellement en une seule pièce.
